# EUROPEAN PATENT SPECIFICATION

(11) **EP 2 345 559 B1**
(45) Date of publication and mention of the grant of the patent: **22.04.2015**
(21) Application number: 11150193.8
(22) Date of filing: 05.01.2011
(51) Int. Cl.: B60R 17/02

(54) **Method and system pertaining to chassis lubrication**
Verfahren und System im Zusammenhang mit der Fahrgestellschmierung
Procédé et système appartenant à une lubrification de châssis

(30) Priority: 18.01.2010 SE 1050050
(43) Date of publication of application: 20.07.2011
(73) Proprietor: Scania CV AB (publ), 151 87 Södertälje (SE)
(72) Inventor: Stenlaas, Ola, SE-151 48, SÖDERTÄLJE (SE)

(56) References cited:
- DE-A1- 3 638 714

## Description

### Field of the invention

The present invention relates to systems for determination of chassis lubrication needs.

### Background to the invention

The main costs involved in continuous operation of a heavy vehicle comprise remuneration for the driver, fuel for propulsion of the vehicle, and repair and maintenance costs. Within each of these areas it is therefore important to keep the cost down as much as possible while at the same time not causing any risks to safety when the vehicle is in motion.

It is important that vehicles in general and heavy vehicles in particular are maintained correctly so that their operation entails as few problems as possible while at the same time their service life is not shortened. For this reason, such vehicles are usually provided with a service schedule of operations to be effected at, for example, certain intervals of time and/or distance travelled.

These operations may take the form of checks on various of the vehicle's functions, e.g. its brake system, and also changing of components and/or fluids, e.g. air filters, oil filters, motor oil etc. Particularly in the case of heavy vehicles, it is also important that lubrication of the chassis is done regularly and correctly.

DE 3638714 A1 discloses a method for lubricating a machine according to certain parameters but is silent with regard to the environmental parameters.

The service interval between two consecutive service occasions according to the service schedule is often different for different service operations. For example, the motor oil may be scheduled for changing on each service occasion, whereas other consumables may be scheduled for changing on only every second or third service occasion, and so on. A common feature, however, of these service operations is that an appropriate service date has to be determined.

How difficult this is to do well may depend on the particular operation concerned. For example, motor oil may be scheduled for changing after the vehicle has travelled a certain number of kilometres, after it has travelled a certain number of hours or after a certain time has elapsed. This determination may also involve taking into account, for example, the vehicle driver's driving style in that a less advantageous driving style may result in shorter oil change intervals, and vice versa.

In the case of other service operations, however, it may be more difficult to determine service dates correctly. An example of such an operation is chassis lubrication. Chassis lubrication is important to ensuring long vehicle service life, so it needs to be done at not over-long intervals. It is nevertheless undesirable for chassis lubrication to be done at over-short intervals, since this would entail unwanted extra costs which might for example reduce the competitiveness of a vehicle fleet owner.

It is therefore necessary to be able to determine chassis lubrication intervals in such a way as to result in service dates which are neither too short nor too long.

### Summary of the invention

An object of the present invention is to propose a method for determination of a chassis lubrication date which solves the above problem. This object is achieved with a method according to claim 1.

The present invention proposes a method for determining for a vehicle a chassis lubrication date based at least partly on the vehicle's environmental conditions. The method comprises determining, when said vehicle is in motion, a representation of prevailing environmental conditions. The method further comprises determining a chassis lubrication date based at least partly on said representation of the vehicle's prevailing environmental conditions, i.e. the prevailing conditions in the environment in which the vehicle is travelling.

The present invention has the advantage over prior art solutions that a set chassis lubrication date can be altered in response to changes in the vehicle's environment. Such changes may for example be determined by determination of an environmental parameter, e.g. an air humidity or an air pressure. Determination of said environmental conditions may for example also be done indirectly by determination of air consumption in the vehicle's air suspension system, thereby determining the quality of the road along which the vehicle is travelling. If for example the use of a vehicle subsequently changes, e.g. by a vehicle previously used mainly on motorways being used instead mainly on dirty roads or in a different geographical area with different weather conditions, the present invention makes it possible for this to be automatically taken into account so that chassis lubrication can as necessary be brought forward to an earlier date.

Conversely, if the vehicle changes from being used in a relatively dirty environment to a cleaner environment, chassis lubrication may be set back to a later date. The present invention thus makes it possible for the chassis lubrication interval to be optimised according to prevailing conditions.

Consequently, a recommended chassis lubrication date that has been set, e.g., by the vehicle manufacturer, can be changed according to the present invention, so that the recommended chassis lubrication date is set to an earlier or later date compared to the date set by the manufacturer in dependence of the environment in which the vehicle is travelling.

According to the present invention, the determination of a recommended chassis lubrication date based at least partly on said representation of the vehicle's prevailing environmental conditions is determined disregarding recommended service dates for other service operations.

However, vehicles often require various other service operations, and, in one embodiment, the chassis lubrication date that has been determined according to the present invention can be set to an earlier date if another service operation requires an earlier service date. For example, the chassis lubrication date can be set to an earlier date if the earlier date at which some other service operation must be performed is so close to the chassis lubrication date that two services within a relatively short time period would not be economically justifiable. For example, the chassis lubrication date can be set to the earlier date if the difference in time between the chassis lubrication date according to the present invention and the date of some other vehicle service operation that will render a service workshop visit is less than some suitable threshold.

Further characteristics of the present invention and advantages thereof are indicated by the detailed description set out below of examples of embodiments and the attached drawings.

### Brief description of the drawings

Fig. 1A depicts an example of a vehicle to which the present invention may with advantage be applied.
Fig. 1B depicts an example of an air suspension system pertaining to the vehicle depicted in Fig. 1A.
Fig. 2 depicts an example of a method according to the present invention.
Fig. 3 depicts an example of the vehicle's air filter system.

### Detailed description of examples of embodiments

As mentioned above, it is important that the interval between consecutive chassis lubrication dates be determined correctly.

According to the state of the art, the service interval for a heavy vehicle is determined by, for example, a vehicle workshop in that the vehicle's control system indicates to the driver, e.g. by lighting up a service lamp, the date and/or the distance travelled by the vehicle at which a service is needed.

This date/distance travelled may be adapted to take into account various different parameters, e.g. recommended distance travelled between oil changes. This determination also takes into account an appropriate date for the next chassis lubrication.

The date for the next chassis lubrication is determined primarily by the distance travelled by the vehicle, the way the vehicle is taken care of and the environment in which the vehicle is driven. For example, a vehicle may travel for a longer distance in pure motorway driving before chassis lubrication is needed, as compared with travelling on uneven roads or roads with poor running surfaces. The time interval may depend on how heavy the loads carried by the vehicle are.

A problem with this type of determination of service intervals, however, is that it represents an assessment of various parameters, e.g. the environment in which the vehicle travels, which may change quickly, thereby also modifying the most economic length of interval.

Certain of the above parameters are relatively easy to take into account. For example, the distance travelled and the engine load/power train load are currently already available in the vehicle's control system, so these parameters can routinely be used during operation for adjusting a set service date to prevailing conditions. It is also possible, for example, for input to the vehicle's control system to take place each time the vehicle is washed, making it possible for this parameter too to be taken into account and thereby making it possible, where necessary, for the vehicle's control system to alter a set service interval on the basis of how the vehicle is taken care of. For example, an input to the vehicle's control system may be effected each time the vehicle undergoes cleaning.

In contrast, the vehicle's environment can only very approximately be assessed by workshops and/or haulage operators. The present invention solves this by means of a method whereby, unlike the state of the art, the vehicle's actual environmental conditions are taken into account in the calculation of appropriate service intervals.

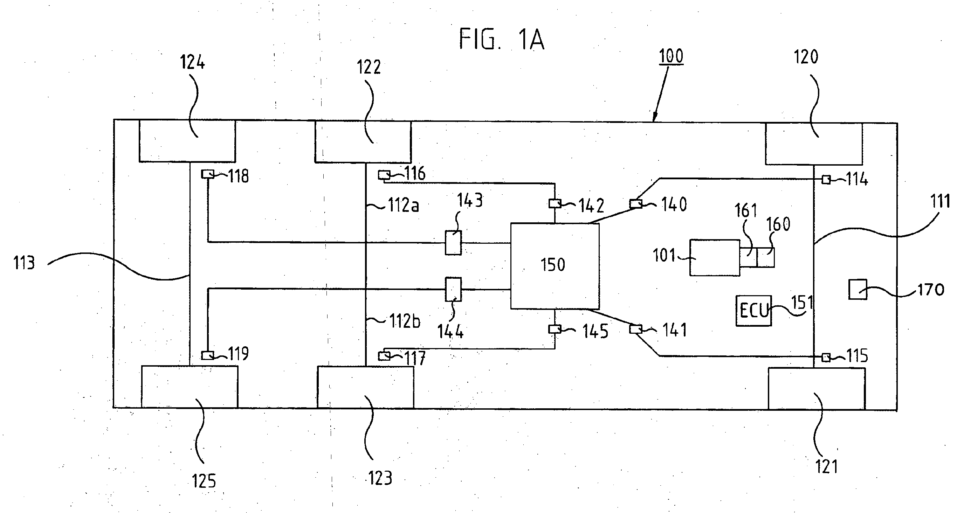

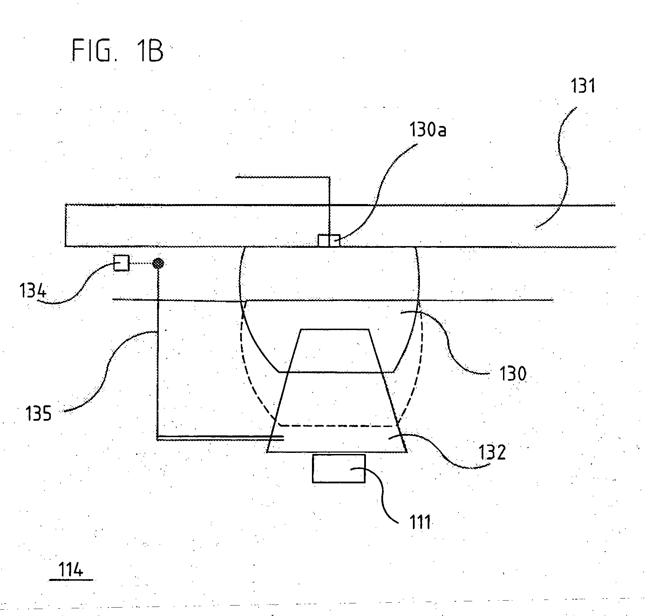

Fig. 1A depicts an example of a vehicle 100 according to an example of an embodiment of the present invention. The vehicle 100 schematically depicted in Fig. 1 comprises a rear axle with powered wheels 122, 123 and a power train comprising a combustion engine 101 which is connected in a conventional way to the vehicle's powered wheels 122, 123 via a gearbox (not depicted). The vehicle further comprises a front axle with steerable wheels 120, 121 and a tag axle with wheels 124, 125.

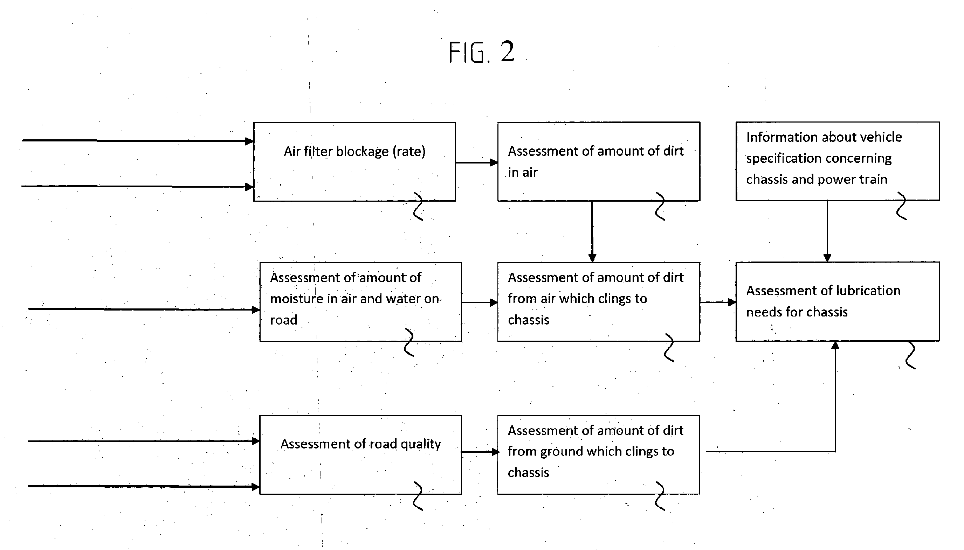

Fig. 2 depicts an example of a method according to the present invention whereby an appropriate date for chassis lubrication can be determined. The method example depicted comprises three different ways of taking the vehicle's actual environmental conditions into account in determination of appropriate chassis lubrication dates.

Determination of appropriate chassis lubrication dates can be done by means of any suitable control unit in the vehicle's control system. Vehicle control systems in modern vehicles usually comprise a communication bus system comprising one or more communication buses for connecting together a number of electronic control units (ECUs), or controllers, and various components located on the vehicle. Such a control system may comprise a large number of control units and the responsibility for a specific function may be divided between two or more control units. For the sake of simplicity, Fig. 1A shows only one such control unit 151 which is used for determination of appropriate chassis lubrication dates and may be adapted to, for example, lighting up a service lamp or indicating in some other way to the driver when the date has been reached or is approaching. The invention may for example take the form of a computer programme which comprises programme code and which effects the method according to the invention when said programme code is executed in the control unit 151. The data programme may for example be stored in a memory in the control unit 151.

The determination of appropriate chassis lubrication dates by the control unit 151 is based on signals from one or more other control units and/or other means provided on the vehicle, resulting in determination of one or more representations of the vehicle's environmental conditions, e.g. by use of detection means to determine an environmental parameter.

At step 201, the control unit 151 effects an example of determination of the environmental conditions of the vehicle 100 by assessing the quality of the road along which the vehicle is travelling.

Heavy vehicles may have an automatic level regulating system whereby, irrespective of load/load distribution, the vehicle's chassis is kept at a desired level relative to the axles during operation, if this is possible.

The level regulation system is usually part of the vehicle's suspension system, which may take the form of a pneumatic air suspension system with air suspension mechanisms 114-119 (see Fig. 1A) associated with the respective wheels. In addition, said level regulation performs a major function for the air suspension system by absorbing shocks caused by unevenness of the road surface.

The air suspension system may however also be used by the present invention for determining a representation of the kind of road on which the vehicle is travelling. It is generally the case that poor roads often have on them more dirt/gravel than roads of better quality, so the running surface on which the vehicle is travelling may provide a good indication of factors in the vehicle's environment.

Fig. 1B depicts in more detail the suspension mechanism 114 for a wheel. The suspension mechanisms associated with the other wheels may be similar to that depicted in Fig. 1B. The suspension mechanism 114 comprises a bellows 130 fastened to the vehicle chassis 131. The bellows 130 comprises a connection 130a for compressed air, and the air supply for the respective air suspension mechanism 114 is controlled by a valve 140 (see fig 1A). The respective valve 140 for the respective bellows controls the bellows pressure by control of air supply from a tank 150. Again with reference to Fig. 1B, the bellows 130 is mounted on a bellows support 132 which is fastened to the vehicle axle 111. By suitable control of the pressure supplied to the bellows 130 by the valve 140 it is possible to control the level of the bellows 130 relative to the bellows support 132 and hence the level of the chassis relative to the vehicle axle. If for example the bellows pressure is high, a smaller portion of the bellows support 132 will penetrate the bellows 130 (see continuous line in Fig. 1B) and the distance between the chassis and the axle will also be greater. Conversely, if the bellows pressure is low, the bellows support will to a greater extent penetrate the bellows 130 and the distance between the chassis and the axle will be smaller (see broken line in Fig. 1B).

As mentioned above, this level regulating mechanism is also used as a shock absorbing (suspension) mechanism. If for example the vehicle travels over an irregularity in the running surface which causes the vehicle axle 111 to be subjected to an upward force and hence be pressed against the vehicle chassis 131, this means that the bellows support 132 is pushed up into the bellows, increasing the bellows pressure to a level which exceeds the bellows pressure level set by the valve 140. This overpressure will be released into the atmosphere, e.g. by the valve 140 or some other overpressure valve, or via leakage between the bellows 130 and the bellows support 132, or in some other suitable way. When the vehicle travels over such irregularities, there is therefore air consumption in the air suspension system. This air consumption can be measured, e.g. by pressure gauge and/or flow meter in the air tank 150, making it possible to obtain a representation of the total air consumption of the air suspension system. As will be appreciated, this consumption will be lower when the vehicle travels on a smooth running surface, with little need to absorb shocks, than when it travels on an uneven running surface with great need to absorb shocks, so the air consumption can be used as a measure of the quality of the road. As an uneven running surface is usually also characterised, as compared with an even running surface, by a larger amount of dirt such as dust, gravel etc., with consequently greater risk of a larger proportion of dirt being thrown up against the subframe of the moving vehicle, the air consumption of the air suspension system can also be used as a representation of the amount of dirt to which the moving vehicle is exposed, step 206, and hence also as an input for determination of appropriate chassis lubrication dates when an uneven running surface results in greater probability of dirt being thrown up at the vehicle.

Step 202 in Fig. 2 is another example of determination of the vehicle's environmental conditions which can with advantage be used in determination of appropriate chassis lubrication dates. In this step an air filter blockage rate is determined.

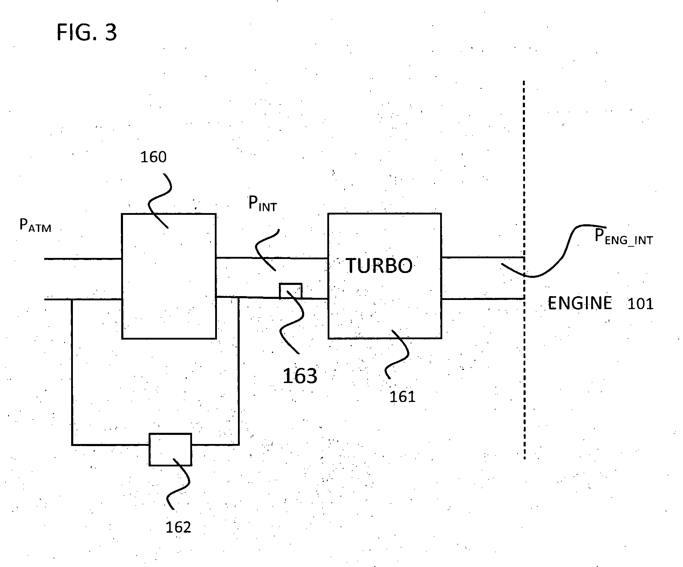

The vehicle depicted in Fig. 1A further comprises an air filter 160. The air filter 160 is used to filter the air supplied to the vehicle's engine/turbo system, which is depicted in more detail in Fig. 3. As may be seen in Fig. 3, the air filter 160 is situated upstream (relative to the air flow direction) of a turbo unit 161. When the vehicle is in motion, dirt may accumulate on/in the filter 160. This dirt accumulation will cause a pressure drop ΔP across the filter 160, which pressure drop will increase over time as more and more dirt accumulates in the filter 160. Depending on the environment in which the vehicle is travelling, this dirt accumulation will take place at a faster or slower rate. The cleaner the vehicle's environment, the longer its air filter will take to become blocked.

The blockage rate of the air filter can be determined in various different ways. Perhaps the most straightforward way is to determine the pressure drop across the filter 160 by means of a pressure sensor 162. Thus determining how this pressure drop varies over time makes it possible to determine the blockage rate of the air filter, which can be used in determination of speed chassis lubrication dates. Instead of using a pressure sensor 162, it is possible to use the atmospheric pressure P_{ATM} (this pressure is usually known in the vehicle's control system and is measured in an appropriate way by suitable pressure sensors with which the vehicle is provided) together with any further pressure occurring in the air intake system, which may for example take the form of PINT, i.e. the pressure on the inlet side of the turbo. Instead of using the pressure P_{INT} it is for example possible to use the pressure after the turbo unit 161, i.e. the pressure P_{ENG_INT} of the inlet air for the engine 101 when the respective pressures before and after the turbo unit 161 are connected to one another in a conventional way via the turbo unit 161. The pressure drop does however depend on the air flow, i.e. the pressure drop across the air filter will depend on the amount of air passing through the filter, so achieving as good a determination as possible of the blockage rate entails combining said pressure determination with a mass flow determination, which may for example be done by the usually provided mass flow meter 163 which measures the air mass flow on the inlet side of the turbo unit 161.

The filter blockage rate determined can then be used according to the present invention to generate a representation of the vehicle's environmental conditions, e.g. in the form of an assessment of the amount of dirt in the air around the vehicle, step 204 in Fig. 2, for use in determination of appropriate chassis lubrication dates. Instead of using an air filter of the above type, it is for example possible to use a cab filter, in which case the blockage rate may for example be determined by means of the pressure difference across the filter together with the cab fan speed.

Step 203 in Fig. 2 is a further example of a determination of the vehicle's environmental conditions which is also usable with advantage in determination of appropriate chassis lubrication dates. Step 203 does a determination of the vehicle's windscreen wiper usage.

Vehicles usually have windscreen wipers for use on their windscreen in driving conditions which involve precipitation and/or wet roads. The frequency of windscreen wiper use is also usually related to the amount of precipitation/the wetness of the road. According to the present invention it is therefore also possible for windscreen wiper usage to be used in determination of appropriate chassis lubrication dates. Determination of windscreen wiper usage may be done in various ways. For example, the vehicle 100 in Fig. 1A may have one or more windscreen wiper motors 170 for driving its windscreen wipers. By determining the amount of use of this windscreen wiper motor 170, and preferably also the speed at which it is run (a vehicle's windscreen wiper can usually be run at various different speeds as a good way of adapting to varying precipitation), a representation of the vehicle's environmental conditions can be determined. Determination of windscreen wiper usage may be done in various different ways. For example, the vehicle's control system may detect when the windscreen wiper motor is activated and at what speed it is operating. Alternatively, use of a windscreen wiper actuator (e.g. a driver-operated lever) may be detected, since the various positions of the lever are usually detectable by the vehicle's control system in a conventional way and can then be used by the control unit 151 to determine how the vehicle's windscreen wipers are used. It is for example possible at step 203 to determine the total time for which the vehicle's windscreen wipers have been activated or to determine a relationship with regard to the amount of the vehicle's running time during which the windscreen wipers have been used. Alternatively, the windscreen wiper usage may be used to make an assessment of air humidity and the amount of water on the road, for use in subsequent determination of chassis lubrication dates. It is generally the case that the more/the more often the windscreen wipers are used, the greater the probability of dirt, gravel etc. being thrown up at the moving vehicle.

The representation of windscreen wiper usage may then be used by itself, but preferably in combination with the determination arrived at in connection with the air filter blockage rate, since the combination of moisture and dirt can give a very good indication of the vehicle's environmental conditions, step 205. The combination of windscreen wiper usage and air filter blockage may also be adapted to being combined with the air consumption of the air suspension system.

When the aforesaid determinations of the vehicle's environmental conditions have been done, they can then be used for determination of an appropriate chassis lubrication date, step 207, either by means of only one of the above determinations or by means of any desired combination of two or more of them.

The above determinations may be intended to be done continuously or at certain intervals, so a given chassis lubrication date may need to be brought forward or set back in time in response to changes in the vehicle's environmental conditions. An initial chassis lubrication date may for example be determined in a standard way in the vehicle's control system or be determined by, for example, a workshop or a vehicle fleet owner.

Determinations as above may also take into account the vehicle's other properties. This is exemplified by step 208 in Fig. 2, in which information about the vehicle's power train and chassis is involved in determination of chassis lubrication dates. These data may for example be used for determining whether there are certain particularly exposed points/areas on the vehicle which need lubrication at shorter intervals when the vehicle is for example driven during frequent precipitation and/or in poor road conditions. The data supplied at step 208 may for example also be used for determining whether certain types of determination of the vehicle's environmental conditions are not applicable, e.g. because the vehicle has no air suspension system.

In addition to the above examples of determination of the vehicle's environmental conditions it is of course also possible to use other determinations of the vehicle's environmental conditions, so long as they can be done by use of sensors and/or means provided on the vehicle. Instead of using the vehicle's air suspension system it is possible to use a level sensor to detect movements of the axles relative to the chassis. This is indicated in Fig. 1B in which a level sensor 134 situated on a chassis can be used in conjunction with a lever 135 situated on an axle to determine the axle's movement relative to the chassis. Another way of determining the quality of the road may be to detect movements in the springing of the driver's seat.

Under the method depicted in Fig. 2 for determination of chassis lubrication dates, all of the above examples are applicable, but it should be appreciated that the determination may alternatively be done by means of only one of the above environmental determinations or by any desired combination of two or more of them. It is however generally the case that a combination of two or more determinations may produce a more reliable result. For example, a determination of windscreen wiper usage may with advantage be combined with air filter blockage rate as above, or air consumption in the suspension system, to arrive at a reliable determination, since dirt in combination with moisture usually represents the greatest risk of contamination.

## Claims

1. A method for determining for a vehicle a chassis lubrication date based at least partly on the vehicle's environmental conditions, which method comprises:
- determining, when said vehicle is in motion, a representation of prevailing environmental conditions, and
- determining a chassis lubrication date based at least partly on said representation of the vehicle's prevailing environmental conditions, whereby said representation of prevailing environmental conditions is determined by determining a representation of an air humidity in the vehicle's environment and/or a representation of a liquid condition of the running surface along which said vehicle is travelling and/or a representation of an air quality in said vehicle's environment and/or a representation of irregularities in the running surface along which said vehicle is travelling.

2. A method according to claim 1, whereby said representation of prevailing environmental conditions is a representation of prevailing conditions in the environment of the vehicle.

3. A method according to claim 1 or 2, whereby said determination of a chassis lubrication date is a recommended chassis lubrication date.

4. A method according to any of claims 1-3, whereby said determination of a recommended chassis lubrication date based at least partly on said representation of the vehicle's prevailing environmental conditions is determined disregarding recommended service dates for other service operations.

5. A method according to any of claims 1-4, whereby the chassis lubrication date can be set to the earlier date than said determined date if the difference in time between the chassis lubrication date according to the present invention and the date of at least one other vehicle service operation that will render a service workshop visit is less than a first time.

6. A method according to any of claims 1-5, whereby said representation of prevailing environmental conditions is determined by detection means provided on the vehicle.

7. A method according to claim 1, whereby said determination is done by determining the vehicle's windscreen wiper usage.

8. A method according to,claim 1, whereby said air quality is determined by determining a representation of a dirt content in said vehicle's environment.

9. A method according to claim 1 or 8, whereby said air quality/dirt content is determined by determining a blockage rate for an air filter.

10. A method according to claim 9, whereby said blockage rate for said filter is determined by determining a pressure difference across said filter or other means in an air flow path associated via said filter.

11. A method according to claim 9, whereby said blocage rate is determined via said pressure difference and by determining a representation of an air flow in said air flow path.

12. A method according to claim 1, whereby said representation of irregularities in the running surface along which said vehicle is travelling is determined via one or more of the following:
- detection of air consumption in air suspension systems;
- detection of movements of at least one vehicle axle relative to a vehicle chassis;
- detection of movements in the springing system for a driver's seat.

13. A method according to any one of the foregoing claims, whereby said determination of said chassis lubrication dates is by means of at least two mutually different representations of prevailing environmental conditions.

14. A method according to any one of the foregoing claims, whereby said determination of said chassis lubrication dates is further based at least partly on information concerning said vehicle.

15. A system for determining for a vehicle a chassis lubrication date based at least partly on the vehicle's environmental conditions, **characterised in that** the system comprises means for:
- determining, when said vehicle is in motion, a representation of prevailing environmental conditions, and
- determining a chassis lubrication date based at least partly on said representation of the vehicle's prevailing environmental conditions, whereby said representation of prevailing environmental conditions is determined by determining a representation of an air humidity in the vehicle's environment and/or a representation of a liquid condition of the running surface along which said vehicle is travelling and/or a representation of an air quality in said vehicle's environment and/or a representation of irregularities in the running surface along which said vehicle is travelling.

16. A vehicle **characterised in that** it comprises a system according to claim 17.

## Patentansprüche

1. Verfahren zum Ermitteln eines Fahrgestellschmierungszeitpunkts für ein Fahrzeug, zumindest teilweise basierend auf Umgebungsbedingungen des Fahrzeugs, wobei das Verfahren umfasst:
- Ermitteln einer Wiedergabe vorherrschender Umgebungsbedingungen, wenn das Fahrzeug in Bewegung ist, und
- Ermitteln eines Fahrgestellschmierungszeitpunkts, zumindest teilweise basierend auf der Wiedergabe vorherrschender Umgebungsbedingungen des Fahrzeugs, wobei die Wiedergabe vorherrschender Umgebungsbedingungen ermittelt wird durch Ermitteln einer Wiedergabe einer Luftfeuchtigkeit in der Umgebung des Fahrzeugs und/oder einer Wiedergabe eines Flüssigkeitszustands einer Fahrfläche, entlang der das Fahrzeug fährt, und/oder einer Wiedergabe einer Luftqualität in der Umgebung des Fahrzeugs und/oder einer Wiedergabe von Unebenheiten in der Fahrfläche, entlang der das Fahrzeug fährt.

2. Verfahren nach Anspruch 1, wobei die Wiedergabe vorherrschender Umgebungsbedingungen eine Wiedergabe vorherrschender Bedingungen in der Umgebung des Fahrzeugs ist.

3. Verfahren nach Anspruch 1 oder 2, wobei die Ermittlung eines Fahrgestellschmierungszeitpunkts ein empfohlener Fahrgestellschmierungszeitpunkt ist.

4. Verfahren nach einem der Ansprüche 1 bis 3, wobei die Ermittlung eines empfohlenen Fahrgestellschmierungszeitpunkts, zumindest teilweise basierend auf der Wiedergabe vorherrschender Umgebungsbedingungen des Fahrzeugs, unter Nichtbeachten empfohlener Wartungszeitpunkte für andere Wartungstätigkeiten ermittelt wird.

5. Verfahren nach einem der Ansprüche 1 bis 4, wobei der Fahrgestellschmierungszeitpunkt auf den früheren Zeitpunkt als den ermittelten Zeitpunkt einstellbar ist, wenn der Zeitunterschied zwischen dem Fahrgestellschmierungszeitpunkt gemäß der vorliegenden Erfindung und dem Zeitpunkt zumindest einer anderen Fahrzeugwartungstätigkeit, die einen Werkstattwartungsbesuch zur Folge hat, geringer ist als eine erste Zeit.

6. Verfahren nach einem der Ansprüche 1 bis 5, wobei die Wiedergabe vorherrschender Umgebungsbedingungen durch Erfassungsmittel ermittelt wird, die an dem Fahrzeug vorgesehen sind.

7. Verfahren nach Anspruch 1, wobei die Ermittlung durch Ermitteln der Scheibenwischernutzung des Fahrzeugs durchgeführt wird.

8. Verfahren nach Anspruch 1, wobei die Luftqualität durch Ermitteln einer Wiedergabe eines Schmutzgehalts in der Umgebung des Fahrzeugs ermittelt wird.

9. Verfahren nach Anspruch 1 oder 8, wobei die Luftqualität/der Schmutzgehalt durch Ermitteln eines Blockierungsgrads für einen Luftfilter ermittelt wird.

10. Verfahren nach Anspruch 9, wobei der Blockierungsgrad für den Filter durch Ermitteln einer Druckdifferenz über den Filter oder andere Mittel in einem mit dem Filter verbundenen Luftstromweg ermittelt wird.

11. Verfahren nach Anspruch 9, wobei der Blockierungsgrad über die Druckdifferenz und durch Ermitteln einer Wiedergabe eines Luftstroms in dem Luftstromweg ermittelt wird.

12. Verfahren nach Anspruch 1, wobei die Wiedergabe von Unebenheiten in der Fahrfläche entlang der das Fahrzeug fährt, über eines oder mehrere der Folgenden ermittelt wird:
- Erfassung eines Luftverbrauchs in Luftfederungssystemen;
- Erfassung von Bewegungen wenigstens einer Fahrzeugachse relativ zu einem Fahrzeugfahrgestell;
- Erfassung von Bewegungen in der Federungsanordnung für einen Fahrersitz.

13. Verfahren nach einem der vorhergehenden Ansprüche, wobei die Ermittlung der Fahrgestellschmierungszeitpunkte mittels wenigstens zwei voneinander verschiedener Wiedergaben vorherrschender Umgebungsbedingungen ausgeführt wird.

14. Verfahren nach einem der vorhergehenden Ansprüche, wobei die Ermittlung der Fahrgestellschmierungszeitpunkte des Weiteren zumindest teilweise auf Informationen bezüglich des Fahrzeugs basiert.

15. System zum Ermitteln eines Fahrgestellschmierungszeitpunkts für ein Fahrzeug, zumindest teilweise basierend auf Umgebungsbedingungen des Fahrzeugs, **dadurch gekennzeichnet, dass** das System Mittel umfasst, zum:
- Ermitteln einer Wiedergabe vorherrschender Umgebungsbedingungen, wenn das Fahrzeug in Bewegung ist, und
- Ermitteln eines Fahrgestellschmierungszeitpunkts zumindest teilweise basierend auf der Wiedergabe vorherrschender Umgebungsbedingungen des Fahrzeugs, wobei die Wiedergabe vorherrschender Umgebungsbedingungen ermittelt wird durch Ermitteln einer Wiedergabe einer Luftfeuchtigkeit in der Umgebung des Fahrzeugs und/oder einer Wiedergabe eines Flüssigkeitszustands einer Fahrfläche, entlang der das Fahrzeug fährt, und/oder einer Wiedergabe einer Luftqualität in der Umgebung des Fahrzeugs und/oder einer Wiedergabe von Unebenheiten in der Fahrfläche, entlang der das Fahrzeug fährt.

16. Fahrzeug, **dadurch gekennzeichnet, dass** dieses ein System nach Anspruch 17 umfasst.

## Revendications

1. Procédé de détermination pour un véhicule d'une date de lubrification de châssis en fonction au moins en partie des conditions environnementales du véhicule, lequel procédé comprend :
- la détermination, lorsque ledit véhicule est en mouvement, d'une représentation de conditions environnementales prévalentes, et
- la détermination d'une date de lubrification de châssis en fonction au moins en partie de ladite représentation des conditions environnementales prévalentes du véhicule, ladite représentation des conditions environnementales prévalentes étant déterminée par la détermination d'une représentation d'une humidité de l'air dans l'environnement du véhicule et/ou une représentation d'une condition liquide de la surface de roulage sur laquelle ledit véhicule se déplace et/ou une représentation d'une qualité de l'air dans l'environnement dudit véhicule et/ou une représentation d'irrégularités sur la surface de roulage sur laquelle ledit véhicule se déplace.

2. Procédé selon la revendication 1, dans lequel ladite représentation des conditions environnementales prévalentes est une représentation de conditions prévalentes dans l'environnement du véhicule.

3. Procédé selon la revendication 1 ou 2, dans lequel ladite détermination d'une date de lubrification de châssis est une date de lubrification de châssis recommandée.

4. Procédé selon l'une quelconque des revendications 1 à 3, dans lequel ladite détermination d'une date de lubrification de châssis recommandée en fonction au moins en partie de ladite représentation des conditions environnementales prévalentes du véhicule est déterminée indifféremment des dates d'entretien recommandées pour d'autres opérations de service.

5. Procédé selon l'une quelconque des revendication 1 à 4, dans lequel la date de lubrification de châssis peut être définie à la date antérieure à ladite date déterminée si la différence de temps entre la date de lubrification de châssis selon la présente invention et la date de l'au moins une autre opération d'entretien de véhicule qui sera réalisée lors d'une visite en atelier d'entretien est inférieure à un premier temps.

6. Procédé selon l'une quelconque des revendication 1 à 5, dans lequel ladite représentation de conditions environnementales prévalentes est déterminée par des moyens de détection prévus sur le véhicule.

7. Procédé selon la revendication 1, dans lequel ladite détermination est effectuée par détermination de l'usage des essuie-glace du véhicule.

8. Procédé selon la revendication 1, dans lequel ladite qualité de l'air est déterminée par la détermination d'une représentation d'une teneur en poussière de l'environnement dudit véhicule.

9. Procédé selon la revendication 1 ou 8, dans lequel ladite qualité de l'air/teneur en poussière est déterminée par la détermination d'un taux de blocage d'un filtre à air.

10. Procédé selon la revendication 9, dans lequel ledit taux de blocage dudit filtre est déterminé par la détermination d'une différence de pression de part et d'autre dudit filtre ou d'autres moyens sur une voie d'écoulement d'air associés via ledit filtre.

11. Procédé selon la revendication 9, dans lequel ledit taux de blocage est déterminé via ladite différence de pression et par détermination d'une représentation d'un flux d'air sur ladite voie d'écoulement d'air.

12. Procédé selon la revendication 1, dans lequel ladite représentation d'irrégularités de la surface de roulement sur laquelle ledit véhicule se déplace est déterminée via un ou plusieurs de ce qui suit :
- détection de la consommation d'air dans les suspensions pneumatiques ;
- détection de mouvements d'au moins un essieu du véhicule par rapport à un châssis du véhicule ;
- détection de mouvements dans les suspensions à ressorts d'un siège conducteur.

13. Procédé selon l'une quelconque des revendications ci-dessus, dans lequel ladite détermination desdites dates de lubrification de châssis se fait au moyen d'au moins deux représentations différentes l'une de l'autre de conditions environnementales prévalentes.

14. Procédé selon l'une quelconque des revendications ci-dessus, dans lequel ladite détermination desdites dates de lubrification de châssis se fonde en outre au moins partiellement sur des informations concernant ledit véhicule.

15. Système de détermination pour un véhicule d'une date de lubrification de châssis en fonction au moins en partie des conditions environnementales du véhicule, **caractérisé en ce que** le système comprend des moyens pour :
- la détermination, lorsque ledit véhicule est en mouvement, d'une représentation de conditions environnementales prévalentes, et
- la détermination d'une date de lubrification de châssis en fonction au moins en partie de ladite représentation des conditions environnementales prévalentes du véhicule, ladite représentation des conditions environnementales prévalentes étant déterminée par la détermination d'une représentation d'une humidité de l'air dans l'environnement du véhicule et/ou une représentation d'une condition liquide de la surface de roulage sur laquelle ledit véhicule se déplace et/ou une représentation d'une qualité de l'air dans l'environnement dudit véhicule et/ou une représentation d'irrégularités sur la surface de roulage sur laquelle ledit véhicule se déplace.

16. Véhicule **caractérisé en ce qu'**il comprend un système selon la revendication 17.
